# EUROPÄISCHE PATENTSCHRIFT

(11) **EP 3 173 162 B1**
(45) Veröffentlichungstag und Bekanntmachung des Hinweises auf die Patenterteilung: **20.05.2020**
(21) Anmeldenummer: 15196785.8
(22) Anmeldetag: 27.11.2015
(51) Int. Cl.: B29B 7/48, B29B 7/60, B29B 7/72, B29B 7/74, B29B 7/90, B29C 48/275, B29C 48/295, B29C 48/425, B29C 48/435, B09B 3/00, B09B 5/00

(54) **VERFAHREN ZUR ERZEUGUNG EINES KAUTSCHUK-REGENERATS SOWIE ZUGEHÖRIGEN KAUTSCHUK-MISCHUNGEN**
METHODS FOR GENERATING A RUBBER REGENERATE AS WELL AS RELATED RUBBER COMPOSITIONS
PROCEDES DE FABRICATION D'UNE MATIERE REGENEREE EN CAOUTCHOUC ET DE MELANGES A BASE DE LADITE MATIERE RÉGÉNÉRÉE

(43) Veröffentlichungstag der Anmeldung: 31.05.2017
(73) Patentinhaber: Continental Reifen Deutschland GmbH, 30165 Hannover (DE)
(72) Erfinder: Naik, Shreyas, 30173 Hannover (DE); Efimov, Konstantin, 30419 Hannover (DE); Schramm, Oliver, 31177 Harsum (DE)
(74) Vertreter: Preusser, Andrea

(56) Entgegenhaltungen:
- WO-A2-03/029298
- DE-A1-102007 000 692
- GB-A- 2 435 043
- US-A1- 2015 191 578

## Beschreibung

Die Erfindung bezieht sich auf das Arbeitsgebiet der Wiederaufbereitung vulkanisierter Elastomerprodukte bzw. Kautschukpolymerprodukte (Gummi), insbesondere von Altreifen, und betrifft ein Verfahren zur Erzeugung eines Kautschuk-Regenerats aus zerkleinertem vulkanisiertem Gummi durch Devulkanisierung in einem Extruder im Beisein eines überkritischen Fluids. Ferner betrifft die Erfindung Kautschukmischungen und technische Kautschukartikel, die unter Verwendung des erfindungsgemäßen Kautschuk-Regenerats hergestellt werden.

Verfahren zum Wiederaufbereiten von Gummi bzw. zum Recycling von Altgummi sind als solche bekannt und werden seit langem intensiv untersucht und weiterentwickelt. Ein sehr wesentlicher Teil des wiederaufzuarbeitenden Altgummis stammt aus Altreifen. Eine der Hauptherausforderungen für das Gummirecycling besteht darin, dass das wiederaufbereitete Material vergleichsweise unzulängliche Eigenschaften im Vergleich zu frischem vulkanisierbarem Material besitzt. Dies beruht auf Strukturveränderungen, die durch die Recyclingverfahren verursacht werden.

Es besteht daher weiterhin ein Bedürfnis, Gummiprodukte so wiederaufzubereiten, dass ein erneut verwendbares Kautschuk-Regenerat entsteht. Hierfür müsste eine Devulkanisierung, d. h. eine reine Aufhebung der Vulkanisationsvernetzung ohne zu stark eigenschaftsverändernde chemische oder strukturelle Schädigung der Polymerkette angestrebt werden.

Aus der WO 2003/029298 A2 ist ein Verfahren zur Modifizierung von vernetztem Gummi bekannt, bei dem ein feinteiliges, beispielsweise geschreddertes oder abgeschliffenes Gummimaterial durch eine mechanische Beanspruchung in Form von Elongation und Scherkräften im Beisein eines überkritischen Fluids, das unter Normalbedingungen gasförmig ist, kontrolliert devulkanisiert werden soll. Diese Behandlung geschieht bevorzugt in einem Zweischneckenextruder bei hohen Drücken von beispielsweise ca. 1.700 bis 2.400 bar. Durch den hohen Druck im Extruder wird das injizierte überkritische Fluid in dem Gummimaterial gelöst und setzt dabei die Viskosität der Gummimasse erheblich herab. Die Temperaturen lagen in den Beispielen zwischen 150 und 300°C. Der Effekt der Devulkanisierung wurde mit Hilfe der Eigenschaftsveränderungen des Materials abgeschätzt, wobei die Mooney-Viskosität, die Bruchdehnung, Zugfestigkeiten, Dehnungswerte, Härtewerte usw. herangezogen wurden. Die Veränderung dieser Werte lässt jedoch keinen klaren Schluss auf den Devulkanisationsgrad zu, sondern erfasst zugleich ein Cracken und damit eine Molekulargewichtsverringerung verursacht durch C-C-Brüche in der Polymerkette. Dieses Cracken zu niedermolekularen Bruchsteinen ist jedoch unerwünscht, es führt zu Qualitätsschwankungen. Auch die hohen Temperaturen - das Verfahren erfordert zumindest bei EPDM zwischen 200 und 300°C Massetemperatur - weisen auf ein verstärktes Cracken hin, das mit der an sich gewünschten Devulkanisierung, d. h. dem Bruch der Vernetzungsbindungen, einhergeht.

Die DE 10 2007 00692 A1 betrifft ein Verfahren zur Regenerierung von schwefelvernetzten Gummivulkanisaten und beruht auf der Erkenntnis, dass sich Dialkylpolysulfid als Regierungsmittel für schwefelvernetzte Gummivulkanisate eignet. In einer Vorbehandlung werden die Gummivulkanisate vorzerkleinert und dann in einer Vorrichtung, beispielsweise in einem Doppelschneckenextruder oder Planetwalzenextruder, bei hohen Temperaturen unter Zugabe von Dialkylpolysulfid regeneriert.

Die GB 2 435 043 A betrifft ein Verfahren zur Devulkanisierung von Kautschuken in einem Druckbehälter unter Einleiten eines kritischen Fluides. Mittels einer Hochdruckpumpe wird aus einem Vorratsbehälter überkritisches CO₂ in den vulkanisierten Kautschuk enthaltenden Druckbehälter gepumpt. Nach einem Aufquellen des Kautschuks wird ein Ventil geöffnet und so ein rapider Druckabfall verursacht. Die dabei entstehenden Zwangskräfte brechen die schwachen S-S und C-S Vernetzungsbindungen in dem Kautschuk auf.

Die US 2015/0191578 A1 betrifft ein nicht-chemisches, mechanisches Verfahren zur Devulkanisierung von Altkautschuk. In einem Planetwalzenextruder wird der Altkauschuk unter mechanischer Einwirkung transportiert und durch zusätzliche Wärmezufuhr erwärmt. Durch die eingebrachte starke mechanische und thermische Belastung brechen die Vernetzungsbindungen des Kautschuks, so dass dieser devulkanisiert.

Die Aufgabe der Erfindung besteht darin, ein selektiveres Gummi-Wiederaufbereitungsverfahren zur Verfügung zu stellen, bei dem in erster Linie die Vernetzung des Elastomers aufgehoben und der Anteil an Kettenbrüchen im Material vergleichsweise gering gehalten wird. Das erzeugte Kautschuk-Regenerat soll in seinen Eigenschaften im Vergleich zu den bekannten Devulkanisierungsverfahren verbessert sein, um die Einsatzbreite des recycelten Materials zu erhöhen.

Die Aufgabe wird durch ein Verfahren zur Erzeugung eines Kautschuk-Regenerats aus zerkleinertem Gummi durch Devulkanisierung in einem Extruder im Beisein eines überkritischen Fluids gelöst, das folgende Schritte aufweist:
- Einbringen des zerkleinerten Gummis in einen Extruder;
- Transportieren des Gummis unter Druckaufbau und bei kontrollierten Temperaturbedingungen;
- Zugabe von CO₂ in den Extruder an einem Zugabepunkt, an dem wenigstens 70 bar erreicht sind;
- Mischen und Plastifizieren der sich unter den Bedingungen im Extruder stromabwärts des Zugabepunkts ergebenden Masse, wobei das Gummi unter Einwirkung von Druck, Temperatur und Scherkräften devulkanisiert wird
- und dass dadurch gekennzeichnet ist, dass der Extruder ein Planetwalzen- oder Ringextruder ist und die kontrollierten Temperaturbedingungen zwischen Raumtemperatur und 160°C eingestellt werden.

Für das Verfahren wird von einem zerkleinertem vulkanisierten Gummimaterial ausgegangen, beispielsweise Altgummi aus Reifen oder anderen technischen Kautschukprodukten, insbesondere aus der Altreifenaufbereitung in Form von Reifengummigranulat oder sogenanntem "tire buffer", Abschliff aus der Reifenrunderneuerung. Alternativ kann jedes andere Altgummi eingesetzt werden, das bei Bedarf vor Anwendung dieses Verfahrens zu zerkleinern ist, damit es dem Extruder zugeführt werden kann.

Unter Gummi wird hier jedes Produkt aus vulkanisiertem, d. h. beispielsweise mit Schwefel oder Peroxid vernetztem Natur- oder Synthesekautschuk verstanden. Hierzu zählen beispielsweise N-Kautschuke oder Nitril-Kautschuke, Olefin-Kautschuke, Halogen-Kautschuke, Silikon-Kautschuke, Schwefel-Kautschuke, Styrol-Kautschuke und andere mehr. Die vulkanisierten Gummimaterialien, die mit der Erfindung wiederaufbereitbar sind, umfassen auch thermoplastische Elastomere und thermoplastische Vulkanisate.

Der Erfindung liegt die Erkenntnis zugrunde, dass thermisch stabilere Vernetzungen nicht auf thermo-mechanischem Weg unter Temperaturerhöhung aufgebrochen werden dürfen, da hierdurch immer das Kohlenstoffgerüst mit angegriffen wird. Die Erfindung geht daher den Weg, unter strikter Temperaturkontrolle gezielt den Eintrag mechanischer Energie zu erhöhen. Dies geschieht durch Auswahl spezieller, hierfür geeigneter Extruder.

Für die Bindungsverhältnisse in schwefelvulkanisiertem Kautschuken gilt Folgendes:

| | C-C | C-S | S-S |
|---|---|---|---|
| Bindungsenergie (kJ/mol) | 370 | 310 | 270 |
| K (N/m) | k_{CC} ∼ 100 > | k_{CS}> | k_{SS}∼3 |

Dies zeigt, dass es praktisch unmöglich ist, Schwefel-Schwefel-Bindungen durch thermische Anregung selektiv zu spalten. Auch die Anwendung hoher mechanischer Energie wirkt sich jedoch auf die Massetemperatur aus und erhöht diese insbesondere zum Extruderende hin teils unkontrolliert. Der erfindungsgemäße Weg sieht vor, das Gummiausgangsmaterial zwar ggf. zunächst zu erwärmen, um das überkritische CO₂ besser lösen und die Masse besser aufquellen zu können, die beim Eintrag mechanischer Energie entstehende zusätzliche Wärme jedoch effektiv abzuführen und ein weiteres Aufheizen über das für die Devulkanisierung erforderliche Minimum hinaus zu vermeiden. Die erforderlichen mechanischen Kräfte werden über Scherkräfte sowie Zug-, Dehnung und Verformung beim Mischen und Kneten unter sehr kontrollierten Temperaturbedingungen in einem durch das überkritische CO₂ gequollenen angelösten Material-Zustand in das Gummi eingebracht.

Bei dem erfindungsgemäßen Verfahren wird die Devulkanisierung des zerkleinerten vulkanisierten Gummiausgangsstoffs im Beisein von überkritischem CO₂ in einem Ringextruder oder einem Planetwalzenextruder durchgeführt. Beide Extrudertypen sind kommerziell in verschiedenen Größen und mit modularem Aufbau erhältlich, sodass eine Devulkanisierungsbehandlung in industriellem Maßstab auch mit hohen Durchsätzen von einigen 100 bis ca. 4.000 kg/h möglich ist. Beide Extrudertypen arbeiten mit einer Vielzahl von Schrauben, die parallel angeordnet sind, sodass der Massestrom im Exruder sich auf mehrere parallel bearbeitete Volumina aufteilt. Aus jedem dieser Volumina kann die Wärme besonders effizient abgeführt oder in dieses Volumen zugeführt werden. Aufgrund der Geometrie der mechanisch zusammenwirkenden Teile ist die Vermischung sehr effektiv.

Bei einem Ringextruder arbeiten mehrere, beispielsweise zwölf gleichsinnig drehende, dicht kämmende Schnecken in ringförmiger Anordnung zusammen. Die Schnecken sind zwischen einem inneren, im Allgemeinen feststehenden Kern und dem äußeren Gehäuse eingefasst. Die im Extruder durch die Schraubenbewegung transportierte Masse befindet sich in engen Spaltvolumina zwischen zwei Schnecken, zwischen Schnecke und Gehäusewand oder zwischen Schnecke und Kern. Dies sorgt für hohe Mischleistungen und exakte Temperaturführung aufgrund des großflächigen Kontakts zu Maschinenoberflächen. Die gute Mischleistung wirkt mit der hohen Diffusivität von überkritischem CO₂ zusammen, sodass schnell eine sehr homogene gut fließende Mischung erzeugt wird. Der Ringextruder erzeugt aufgrund seiner Geometrie einen hohen Eintrag rein mechanischer Energie durch Scherkräfte, Zug, Dehnung und Verformung. Die dabei erzeugte Wärme kann jedoch über die großen zur Verfügung stehenden Flächen leicht abgeführt werden, sodass die Temperaturkontrolle, die die reine Devulkanisierung fördert und den thermischen Kettenbruch weitestgehend unterdrückt, sehr gut verwirklicht werden kann.

Ringextruder sind beispielsweise von der Firma Extricom GmbH, Lauffen a.N., Deutschland erhältlich. Diese Ringextruder können durch modulare Bauweise an die Bedürfnisse der Devulkanisierung gut angepasst werden. Beispielsweise sind Dosierungs- und Seitenbeschickungseinheiten, verschiedene Austragseinheiten und Weiterverarbeitungseinheiten, beispielsweise zur Granulierung, erhältlich.

Planetwalzenextruder ähneln den vorgenannten Ringextrudern darin, dass zahlreiche Schrauben parallel arbeiten und den Massefluss in Teilströme aufteilen - mit den oben schon genannten Vorteilen für die Devulkanisierung in einem solchen Extruder. Beim Planetwalzenextruder wälzen sich sogenannte Planetspindeln auf einer Zentralspindel ab. Die Planetspindeln sind ringförmig um die angetriebene Zentralspindel angeordnet. Sie laufen bei Betrieb um die Zentralspindel "planetenartig" um. Zusätzlich werden sie über eine innen verzahnte Buchse geführt. Da die Temperierung sowohl über die Zentralspindel als auch über den Walzenzylinder läuft ist auch hier eine sehr gute Wärmeübertragung möglich. Aufgrund der sehr guten Wärmeab- und -zuführung ist die Temperierung sehr exakt. Die Mischtemperatur kann - auch modular unterschiedlich - auf jedem beliebigen Niveau gehalten werden. Die Planetwalzenextruder haben eine besonders hohe Dispergierleistung. Da nicht nur die Planetspindeln ineinandergreifen sondern zusätzlich noch die Zentralspindel mit den Planetspindeln verzahnt ist haben die Geräte eine gute Selbstreinigungswirkung, was für eine Kautschukverarbeitung sehr vorteilhaft ist. Wie beim Ringextruder sind auch die Planetwalzenextruder modular aufbaubar, besitzen ggf. Seiteneinspeisungseinheiten, Dosiereinheiten, Weiterverarbeitungsmodule usw. Planetwalzenextruder sind beispielsweise kommerziell erhältlich bei der Tröster GmbH & Co. KG, Hannover, Deutschland oder der Entex Rust & Mitschke GmbH, Bochum, Deutschland.

Das erfindungsgemäße Verfahren ist daher mit kommerziellen individuell anpassbaren Geräten aus dem Anlagenbau zu verwirklichen. Eine solche Teilanlage für die Devulkanisierung von Gummi kann in größeren Anlagen zur Kautschukverarbeitung bzw. mit zusätzlichen Anlageteilen zur Weiterverarbeitung des Regenerats kombiniert werden.

Im ersten Schritt des erfindungsgemäßen Verfahrens wird das zerkleinerte vulkanisierte Gummi als Ausgangsmaterial in einen solchen Planetwalzen- oder Ringextruder eingebracht. Dies kann mit konventionellen Mitteln erfolgen, beispielsweise über eine konventionelle kommerzielle Dosiereinheit. Eine gravimetrische Dosierung ist bevorzugt, um die optimalen Mengenverhältnisse zwischen überkritischem Fluid und Ausgangsgummimaterial optimal einhalten zu können.

In einem zweiten Schritt des erfindungsgemäßen Verfahrens wird das eingebrachte Gummi durch den Schneckenvortrieb innerhalb des Extruders transportiert, wobei sich Druck aufbaut. Der gesamte Transport von der Gummizugabe bis zum Austritt des Regenerats am Extruderende erfolgt unter kontrollierten Temperaturbedingungen, die zwischen Raumtemperatur und 160°C eingestellt werden.

Die Temperatur der Masse wird durch den Eintrag der mechanischen Energie von selbst steigen. Es kann jedoch vorteilhaft sein, im vorderen Bereich des Extruders zusätzlich zu heizen, um die Extruderlänge insgesamt verkürzen und den CO₂-Zugabepunkt nach vorne verlegen zu können. Es ist strikt darauf zu achten, dass die gewählte Maximaltemperatur die u. a. in Abhängigkeit von der chemischen Zusammensetzung des aufzubereitenden Materials gewählt werden wird, nicht überschritten wird.

In einem dritten Schritt wird an einem Zugabepunkt, an dem wenigstens 70 bar (7.000 MPa) erreicht sind, CO₂ in den Extruder eingeführt bzw. eingepresst.

Aufgrund des Phasendiagramms von Kohlendioxid ist ab einer kritischen Temperatur von 31°C oberhalb 73,8 bar mit Sicherheit der überkritische Zustand erreicht. Bei einer Zugabe des CO₂ im Druckbereich oberhalb 70 bar wird der überkritische Zustand in kürzester Zeit erreicht. Die Diffusivität des CO₂ ist sehr hoch. Durch die gute Durchmischung im Planetwalzen- oder Ringextruder tritt schnell eine starke Quellung des Materials ein, die die Devulkanisierung erleichtert.

Es wird vorzugsweise mit gegenüber Raumtemperatur zumindest leicht erhöhter Temperatur gearbeitet. Besonders bevorzugt ist, dass eine Maximaltemperatur von 160°C nicht überschritten wird, weiter vorzugsweise von 150°C nicht überschritten wird und insbesondere von 120°C nicht überschritten wird. Besonders bevorzugt erscheint derzeit eine Verfahrensführung zwischen 100 und 120°C und einem Druck, der wenigstens ab dem CO₂-Zugabepunkt 70 bar oder höher beträgt.

Soll aufgrund der Chemie des Ausgangsmaterials bei relativ niedrigen Temperaturen, beispielsweise Temperaturen unter 100°C, gearbeitet werden, kann vorgesehen werden, dass der Druck am Zugabepunkt für CO₂ und stromabwärts im Exruder größer oder gleich 74 bar beträgt, um in jedem Falle sicherzustellen, dass die Devulkanisierung im Beisein von überkritischem CO₂ erfolgt.

In einem weiteren Verfahrensschritt nach Zugabe des CO₂ wird die Masse, wie sie sich unter den Bedingungen im Extruder stromabwärts des CO₂-Zugabepunkts ergibt, weiter intensiv gemischt und plastifiziert, wobei das Gummi unter Einwirkung von Druck, Temperatur und Scherkräften, d. h. unter Einwirkung vorwiegend mechanischer Energie bei kontrolliertem Druck und Temperaturwerten, devulkanisiert wird. Unter diesen erfindungsgemäßen Bedingungen werden die C-C-Bindungen der Kette geschont und es wird in erster Linie die Gummivernetzung des Elastomers aufgebrochen. Für die schwefelvulkanisierten Inhaltsstoffe des behandelten Gummiausgangsprodukts gilt, dass die S-S-Bindungen vor den C-C-Bindungen selektiv aufgebrochen werden.

Bei der Erfindung wird konkret CO₂ in Form eines überkritischen Fluids verwendet, um das zu behandelnde Material zu erweichen und aufzuquellen und dessen Fließeigenschaften im Extruder zu verbessern. Neben anderen Effekten schont dies auch den Extrudermotor und verringert den erforderlichen Energieeintrag durch den Extruderantrieb. Durch die hohe Diffusivität des CO₂ erfolgt eine schnelle und starke Quellung des Materials. Das CO₂ wirkt ähnlich einem Lösungsmittel, ohne mit dessen Nachteilen behaftet zu sein. Das CO₂ kann am Ende des Verfahrens sehr einfach wieder entfernt werden, wenn der Druck erniedrigt wird bzw. durch Entspannen beim Verlassen des Extruderausgangs. Das auf diese Weise gasförmig anfallende CO₂ kann zurückgewonnen, gesammelt, unter Druck gebracht und wiederverwendet werden. Das CO₂ ändert die Eigenschaften des Gummimaterials nicht und kann aus dem Regenerat nach der Behandlung vollständig entfernt werden. Es ist nicht toxisch, geruchlos, nicht entflammbar und chemisch in Bezug auf die im Extruder ablaufenden Reaktionen inert.

Dadurch dass bei der Erfindung ausschließlich CO₂ zur Veränderung der physikalischen Eigenschaften der Masse eingesetzt wird, ist der Zusatz weiterer Chemikalien obsolet. Hierdurch wird vermieden, dass zusätzlich Chemikalien in das Regenerat eingeführt werden, die entweder aufwändig entfernt werden müssten oder die Eigenschaft des Regenerats beeinflussen würden. Hierdurch wird die Weiterverarbeitung des mit dem Verfahren erhaltenen Regenerats einfacher und wirtschaftlicher.

Das zerkleinerte vulkanisierte Gummi wird vorzugsweise gravimetrisch zugeführt und die Zugabe des CO₂ wird mengenmäßig hierauf bezogen. Auf diese Weise kann das optimierte Mengenverhältnis der Reaktionspartner besonders genau eingehalten werden.

Bezogen auf das Gewicht des eingesetzten Gummis werden vorzugsweise 1-10 Gew.-% CO₂ und weiterbevorzugt 1-5 Gew.-% CO₂ verwendet.

Die Teilchengröße des zerkleinerten vulkanisierten Gummis sollte einen mittleren Teilchendurchmesser von 7 mm, vorzugsweise von 5 mm, weiter vorzugsweise von 4 mm nicht überschreiten. Das Verfahren toleriert damit relativ große Teilchen und ermöglicht so die Aufarbeitung gröberer Granulate, ohne dass diese energieaufwändig zunächst weiter zerkleinert werden müssten. Selbstverständlich ist die Verwendung feiner Pulver, z. B. von Abschliff aus der Runderneuerung (tire buffer) ebenfalls möglich.

Das den Extruder verlassende Kautschuk-Regenerat kann unmittelbar im Anschluss einer Weiterverarbeitung zugeführt werden. Aufgrund des modularen Aufbaus der erfindungsgemäß verwendeten Extruder können geeignete Module für die Weiterverarbeitung auch direkt angeschlossen werden.

Gemäß einer bevorzugten Ausführungsform wird das den Extruder verlassende Kautschuk-Regenerat granuliert. Es kann dann in dieser Form abgepackt und jeder beliebigen Weiterverwendung zugeführt werden.

Weiterhin ist es bevorzugt, das dem Extruder entnommene Kautschuk-Regenerat unmittelbar nach der Entnahme zu kühlen. Dies geschieht vorzugsweise in einem Wasserbad.

Auf Basis der vorstehend gemachten Erläuterungen zum Grundprinzip der Erfindung ist der Fachmann in der Lage, das Verfahren den jeweiligen Erfordernissen anzupassen. Neben Druck und Temperatur längs des Extruders kann u. a. die Schraubengeschwindigkeit variiert werden. Die gewählte Schraubengeschwindigkeit hat Einfluss auf den Druckaufbau, d. h. das Druckprofil und auch den Maximaldruck. Weiterhin kann die Schraubensteigung und die Extruderlänge angepasst werden. Mit Hilfe aller zur Verfügung stehenden Parameter können die optimalen Devulkanisierungsbedingungen für ein bestimmtes eingesetztes Material optimiert werden. Von der Wahl der Parameter wird auch der Wirkungsgrad des Verfahrens abhängen, d. h. zu welchem Grad die Vernetzung des Elastomers aufgebrochen werden kann.

Das mit dem Verfahren erhaltene Granulat kann den verschiedensten Einsatzzwecken zugeführt werden. Die Erfindung umfasst hierfür auch ein Verfahren zum Herstellen einer Kautschukmischung, mit den Schritten: Mischen von einem Kautschukanteil mit wenigstens einem Natur- oder Synthesekautschuk, wenigstens einem Füllstoff sowie optional weiteren Zusatz- und Hilfsstoffen, wobei der Kautschukanteil der Mischung das erfindungsgemäß erhaltene Kautschuk-Regenerat enthält.

Je nach Verwendungszweck schließt dies die Möglichkeit ein, den Kautschukanteil vollständig aus dem Kautschuk-Regenerat bestehen zu lassen. Im Allgemeinen wird man jedoch einen gewissen Anteil an frischem Kautschuk zumischen. Die Füllstoffe und weiteren Zusatz- und Hilfsstoffe sind alle in der Kautschukindustrie hierfür bekannten Stoffe, sodass diese hier nicht näher ausgeführt werden müssen. Es wird auf die reichliche Literatur zu Kautschukmischungen verwiesen.

Die Erfindung umfasst weiter ein Verfahren zum Herstellen eines technischen Kautschukartikels, der unter Verwendung des erfindungsgemäß erhaltenen Kautschuk-Regenerats hergestellt wird. Dabei kann der Artikel neben den kautschukhaltigen Teilen weitere Komponenten aus Metall, Kunststoffen, weiteren Elastomeren oder sonstigem Materialien besitzen. Das Kautschuk-Regenerat kann auch als Füllstoff in einem Composite-Material verwendet werden, wie dies grundsätzlich bekannt ist. Das Kautschuk-Regenerat ist auch als Schüttgut für die Bauindustrie geeignet, insbesondere innerhalb von Straßen- oder Bodenbelägen.

In besonders bevorzugter Ausführungsformen wird der technische Kautschukartikel mit Hilfe der Kautschukmischung, wie vorstehend schon beschrieben, hergestellt. Hierbei können verschiedene Kautschukmischungen für unterschiedliche Teile oder Bereiche des Artikels vorgesehen sein. Im Falle von Reifen können beispielsweise verschiedene Mischungen für unterschiedliche Reifenbauteile, z. B. den Reifenkörper, den Laufstreifen, eine Zwischenlage usw. vorgesehen sein.

Bei den technischen Kautschukartikeln, die unter Verwendung des Regenerats bzw. mit der regenerathaltigen Kautschukmischung hergestellt werden, handelt es sich ganz bevorzugt um Reifen, insbesondere Fahrzeugluftreifen, Gurte, Riemen oder Schläuche.

Die Erfindung arbeitet mit kommerziell erhältlichen und leicht anpassbaren Komponenten, die der Fachmann mit seinem Fachwissen zusätzlich an die jeweilige Aufbereitungsaufgabe ohne weiteres anpassen kann. Das Verfahren ist relativ unkompliziert im Vergleich mit anderen Devulkanisierungsverfahren auf chemischen Wege oder mit anderen physikalischen Verfahren. Es verbraucht weniger spezifische Energie für den Gesamtprozess, nämlich schätzungsweise 1.500 kWh pro Tonne einschließlich einer ggf. erforderlichen Granulierung. Die bisher bekannte chemisch-thermisch Devulkanisierung im Extruder erfordert demgegenüber ca. 2.500 kWh pro Tonne. Der Zusatz weiterer Chemikalien, die ggf. im Anschluss an die Aufbereitung wieder entfernt werden müssten, wird vermieden. Hierdurch wird das Regenerat unmittelbar compoundierbar und für neue Produkte einsetzbar. Das eingesetzte CO₂ kann rückgewonnen werden. Durch die gute Energiebilanz ist das Verfahren auch bezüglich des CO₂-Footprints attraktiv.

Im Folgenden wird die Erfindung anhand der Zeichnungen erläutert. Dies dient rein illustrativen Zwecken und soll nicht beschränkend gelesen werden. Vielmehr wird der Fachmann anhand des Beispiels weitere Ausführungsformen im Sinne dieser Erfindung auffinden können.

Es zeigen:
Figur 1 : die schematische Darstellung einer Anlage für die Durchführung des Verfahrens;
Figur 2 : zwei verschiedene Schneckenanordnungen a) vereinfachte Darstellung der Anordnung der Spindeln im Planetwalzenextruder im Querschnitt b) vereinfachte Darstellung der Anordnung der Schnecken im Ringextruder im Querschnitt.

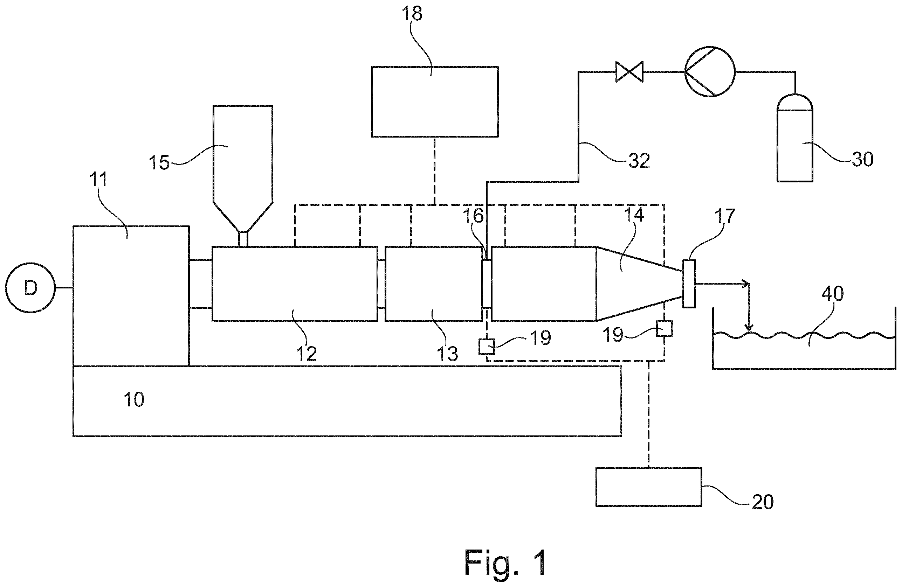

Figur 1 zeigt eine Anlage zur Aufbereitung beispielsweise eines Reifengranulats oder eines Pulvers z. B. aus Abschliff aus der Runderneuerung, auch im Gemisch. Ein im Ganzen mit 10 bezeichneter Extruder, hier ein Ringextruder, besitzt einen Antrieb mit Getriebe 11, über das die Schnecken bzw. die Spindeln des Extruders angetrieben werden. Der Extruder 10 besitzt mehrere Module 12, 13 und 14, wie in der Zeichnung angedeutet, die jedoch diesbezüglich nicht maßstabsgetreu ist. Weitere Module könnten hinzukommen und den Extruder verlängern. Im vorliegenden Fall ist das Modul 12 eine Materialeinzugs- und Kompressionseinheit, an deren vorderen Ende sich eine Dosiereinheit 15 befindet. Im Modul 13 wird das Komprimieren und Mischen fortgesetzt. Am Ende des Moduls 13 ist der für die CO₂-Zugabe erforderliche Druck aufgebaut und die Verfahrenstemperatur spätestens erreicht. Eingangs des dritten Moduls 14 befindet sich der CO₂-Zugabepunkt 16. Die Devulkanisierung findet größtenteils im Modul 14 statt, bevor das Material über die Düse 17, die hier mit einem Sieb kombiniert ist, ausgepresst wird und den Extruder in Pfeilrichtung verlässt. Die Temperatursteuerung und die Durchsatzsteuerung erfolgt mit der Steuereinheit 18 (TCU, Temperature Control Unit) über die auch die Schraubengeschwindigkeit und damit die Verweilzeit eingestellt wird. Hierfür ist die Steuereinheit 18 mit geeigneten Sensoren und Stellgliedern verknüpft, die nicht im Einzelnen dargestellt sind. Die Druckmessung und -kontrolle erfolgt über zwei Druckfühler 19. Die zugehörigen Daten werden in der Anzeigeeinheit 20 dargestellt. Die CO₂-Injektion erfolgt über den Zugabepunkt 16, indem CO₂ aus einem Gasbehälter 30 mit einer Verdrängerpumpe durch Leitung 32 unter Druck zu dem Zugabepunkt 16 zugeführt wird. Das erhaltene Kautschuk-Regenerat wird in diesem Beispiel einer zusätzlichen "dip cooling"-Behandlung unterworfen. Hierfür wird das Regenerat unmittelbar nach dem Austritt aus dem Extruder in ein Wasserbad 40 eingeführt.

Das Altgummigranulat oder Pulver wird als Ausgangsmaterial mit einer Teilchengröße von bis zu 3-4 mm über die Dosiereinheit 15 in den Extruder eingeführt. Innerhalb der Module 12-14 des Extruders sind dabei wenigstens drei Verfahrenszonen ausgebildet, nämlich eine Materialeintrags- und Transportzone, eine Kompressions- und eine Mischzone. Sobald der Druck 70 bar erreicht hat, hier am Ausgang des Moduls 13, wird CO₂ bei Zugabepunkt 15 in die Materialmasse injiziert. Je nach Ausgangsmaterial werden zwischen 2 und 5 Gew.-% CO₂ bezogen auf das Gummigranulat zugeführt. Dabei wird das Granulat mit Hilfe der Dosiereinheit 15 gravimetrisch zu dosiert. Auf derselben Höhe wird eine erste Druckmessung mit einem der Druckfühler 19 vorgenommen. Das CO₂ wird entweder bereits im überkritischen Zustand mit ca. 74 bar bei 31 °C zugeführt oder es nimmt diesen Zustand im Extruder in kürzester Zeit an. Überkritisches CO₂ und Gummi werden sehr gut vermischt und zugleich plastifiziert. Durch die Geometrie bzw. den Aufbau des Extruders 10 werden hohe Scherkräfte eingebracht. Die daraus resultierende Wärmeerzeugung wird abgeführt, sodass die für die jeweiligen Extruderabschnitte vorgegebenen Temperaturen eingehalten werden können. Da die Elastizitätskonstante der S-S-Bindung ca. 30 Mal kleiner als die der C-C-Bindungen der Kohlenstoffkette ist, wird die Mehrzahl der in dem Material vorhandenen S-S-Bindungen gebrochen. Das weitestgehend devulkanisierte Material, das Kautschuk-Regenerat, wird schließlich durch die Düse 17 ausgepresst. Die Expansion und Entspannung an diesem Punkt bewirkt, dass das CO₂ entweicht. Das erhaltene Compound wird anschließend im Wasserbad 40 schnell gekühlt (dip cooling).

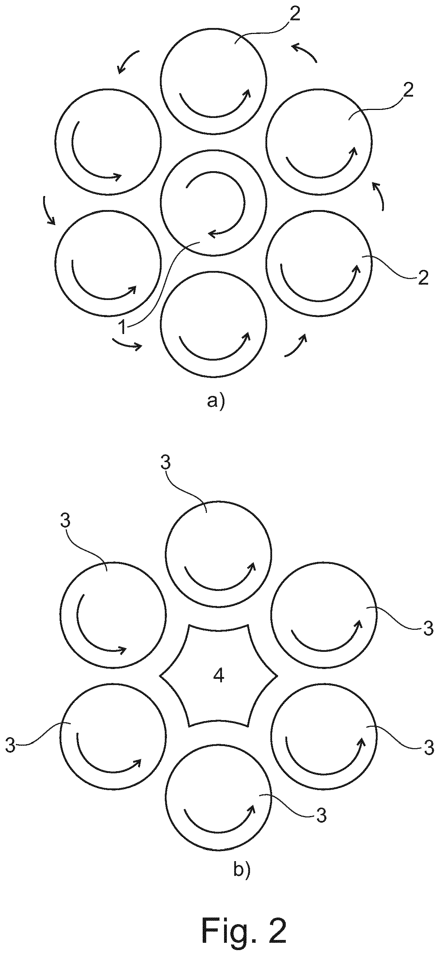

Figur 2 zeigt das Innenleben der beiden nach dieser Erfindung zu verwendenden Extrudertypen in stark vereinfachter schematischer Darstellung. Das Gehäuse bzw. der Walzenzylinder wurde nicht dargestellt.

Figur 2a) zeigt die Spindelanordnung eines Planetwalzenextruders. Um die Zentralspindel 1 sind ringförmig mehrere, hier sechs, Planetspindeln 2 angeordnet. Die Planetspindeln 2 drehen sich gleichsinnig. Sie werden in der Regel nicht gesondert, sondern über die Zentralspindel 1 angetrieben. Die Zentralspindel 1 dreht sich relativ zu den Planetspindeln gegensinnig. Bei Betrieb wandern die Planetspindeln um die Zentralspindel. Durch die Bewegung der sehr großen Gesamtoberfläche der zahlreichen Spindeln können sehr große Scherkräfte aufgebracht werden. Die geförderte Masse verteilt sich gut zwischen den verschiedenen Spindeln und der äußeren Gehäusewand und besitzt so einen sehr großen Oberflächenkontakt relativ zum eigenen Volumen.

Ähnlich sind die Verhältnisse beim Ringextruder, wie in Figur 2b) dargestellt. Die ringförmig angeordneten Extruderschnecken 3 bewegen sich wiederum gleichsinnig. Wie bei dem Planetwalzenextruder wird Material, das sich zwischen den äußeren Spindeln 2 oder Schnecken 3 befindet, von sich entgegengesetzt bewegenden Flächen eingeschlossen was zu sehr hohen Scherkräften führt. Hinzukommt die Scherbelastung, die zwischen Spindeln bzw. hier Schnecken 3 und Zylinderwand des Walzenzylinders sowie zwischen Schnecken 3 und Kern 4 erzeugt wird. Beide Extrudertypen sind daher für die Zwecke der Erfindung besonders geeignet und bringen ein hohes Maß an mechanischer Energie ein, wobei die thermische Belastung gering gehalten werden kann.

### Bezugszeichenliste

- 10 :: Extruder
- 11 :: Getriebe
- 12 :: Extrudermodul
- 13 :: Extrudermodul
- 14 :: Extrudermodul
- 15 :: Dosiereinheit
- 16 :: CO₂-Zugabepunkt
- 17 :: Düse
- 18 :: Steuereinheit, TCU
- 19 :: Druckfühler
- 20 :: Daten-Anzeigeeinheit
- 30 :: Gasbehälter
- 32 :: Leitung / Druckleitung zum Zugabepunkt
- 40 :: Wasserbad für dip cooling
- 1 :: Zentralspindel
- 2 :: Planetspindeln
- 3 :: Schrauben
- 4 :: Kern

## Patentansprüche

1. Verfahren zur Erzeugung eines Kautschuk-Regenerats aus zerkleinertem Gummi durch Devulkanisierung in einem Extruder (10) im Beisein eines überkritischen Fluids, **mit den Schritten:**
- Einbringen des zerkleinerten Gummis in einen
Extruder;
- Transportieren des Gummis unter Druckaufbau und bei kontrollierten Temperaturbedingungen;
- Zugabe von CO₂ in den Extruder an einem Zugabepunkt (16), an dem wenigstens 70 bar erreicht sind;
- Mischen und Plastifizieren der sich unter den Bedingungen im Extruder (10) stromabwärts des Zugabepunkts (16) ergebenden Masse, wobei das Gummi unter Einwirkung von Druck, Temperatur und Scherkräften devulkanisiert wird, **dadurch gekennzeichnet, dass** der Extruder ein Planetwalzen- oder Ringextruder ist und die kontrollierten Temperaturbedingungen zwischen Raumtemperatur und 160°C eingestellt werden.

2. Verfahren nach Anspruch 1, **dadurch gekennzeichnet, dass** die Extrudertemperaturen stromabwärts des CO₂-Zugabepunkts (16) auf nicht mehr als 160°C, vorzugsweise nicht mehr als 150°C, weiter vorzugswese nicht mehr als 120°C und besonders bevorzugt zwischen 100 und 120°C eingestellt werden.

3. Verfahren nach Anspruch 1 oder 2, **dadurch gekennzeichnet, dass** das zerkleinerte Gummi gravimetrisch zugeführt und die Zugabe von CO₂ mengenmäßig hierauf bezogen wird.

4. Verfahren nach einem der Ansprüche 1 bis 3, **dadurch gekennzeichnet, dass ,** bezogen auf das Gewicht des eingesetzten Gummis, 1 bis 10 Gew.-% CO₂ und vorzugsweise 1 bis 5 Gew.-% CO₂ verwendet werden.

5. Verfahren nach einem der Ansprüche 1 bis 4, **dadurch gekennzeichnet, dass** die Teilchengröße des zerkleinerten Gummis einen mittleren Durchmesser von 7 mm, vorzugsweise von 5 mm, nicht überschreitet.

6. Verfahren nach einem der Ansprüche 1 bis 5, **dadurch gekennzeichnet, dass** das den Extruder (10) verlassende Kautschuk-Regenerat granuliert wird.

7. Verfahren nach einem der Ansprüche 1 bis 6, **dadurch gekennzeichnet, dass** das dem Extruder (10) entnommene Kautschuk-Regenerat unmittelbar nach der Entnahme gekühlt wird.

8. Verfahren nach einem der Ansprüche 1 bis 7, **dadurch gekennzeichnet, dass** der Druck am Zugabepunkt (16) für CO₂ und stromabwärts im Extruder (10) größer oder gleich 74 bar beträgt.

9. Verfahren zum Herstellen einer Kautschukmischung, mit den Schritten:
Mischen von einem Kautschukanteil mit wenigstens einem Natur- oder Synthese-Kautschuk, wenigstens einem Füllstoff sowie optional weiteren Zusatz- und Hilfsstoffen, **dadurch gekennzeichnet, dass** der Kautschukanteil der Mischung das nach einem der Ansprüche 1 bis 8 erhaltene Kautschuk-Regenerat enthält.

10. Verfahren zum Herstellen eines technischen Kautschukartikels unter Verwendung des nach einem der Ansprüche 1 bis 8 erhaltenen Kautschuk-Regenerats.

11. Verfahren zum Herstellen eines technischen Kautschukartikels nach Anspruch 10, unter Verwendung der Kautschukmischung nach Anspruch 9.

12. Verfahren zum Herstellen eines technischen Kautschukartikels nach Anspruch 10 oder 11, **dadurch gekennzeichnet, dass** es sich bei dem technischen Kautschukartikel um einen Reifen, insbesondere einen Fahrzeugluftreifen, einen Gurt, einen Riemen oder einen Schlauch handelt.

## Claims

1. Process for producing a recycled rubber from comminuted vulcanized rubber via devulcanization in an extruder (10) in the presence of a supercritical fluid, **with the following steps:**
- introduction of the comminuted vulcanized rubber into an extruder;
- transport of the vulcanized rubber with pressure increase and under controlled temperature conditions;
- addition of CO₂ to the extruder at an input point (16) at which the pressure reaches at least 70 bar;
- mixing and plastification of the composition that arises downstream of the input point (16) under the conditions in the extruder (10), where the vulcanized rubber is devulcanized with exposure to pressure, temperature, and shear forces, **characterized in that** the extruder is a planetary-gear extruder or ring extruder and the controlled temperature conditions are set between room temperature and 160°C.

2. Process according to Claim 1, **characterized in that** the extruder temperatures downstream of the CO₂-input point (16) are set to or below 160°C, preferably to or below 150°C, more preferably to or below 120°C and particularly preferably between 100 and 120°C.

3. Process according to Claim 1 or 2, **characterized in that** the comminuted vulcanized rubber is introduced gravimetrically and the input of CO₂ is related quantitatively thereto.

4. Process according to any of Claims 1 to 3, **characterized in that,** based on the weight of the vulcanized rubber used, 1 to 10% by weight of CO₂ and preferably 1 to 5% by weight of CO₂ are used.

5. Process according to any of Claims 1 to 4, **characterized in that** the particle size of the comminuted vulcanized rubber does not exceed an average diameter of 7 mm, preferably of 5 mm.

6. Process according to any of Claims 1 to 5, **characterized in that** the recycled rubber leaving the extruder (10) is granulated.

7. Process according to any of Claims 1 to 6, **characterized in that** the recycled rubber obtained from the extruder (10) is cooled immediately after it is obtained.

8. Process according to any of Claims 1 to 7, **characterized in that** the pressure at the input point (16) for CO₂ and downstream in the extruder (10) is greater than or equal to 74 bar.

9. Process for the production of a rubber mixture, with the following steps:
mixing of a rubber fraction with at least one natural or synthetic rubber and with at least one filler, and also optionally with further additional and auxiliary substances, **characterized in that** the rubber fraction of the mixture comprises the recycled rubber obtained according to any of Claims 1 to 8.

10. Process for the production of a technical rubber item with use of the recycled rubber obtained according to any of Claims 1 to 8.

11. Process for the production of a technical rubber item according to Claim 10 with use of the rubber mixture according to Claim 9.

12. Process for the production of a technical rubber item according to Claim 10 or 11, **characterized in that** the technical rubber item is a tyre, in particular a pneumatic vehicle tyre, a belt, a strap or a hose.

## Revendications

1. Procédé de production d'une matière régénérée de caoutchouc à partir d'une gomme broyée par dévulcanisation dans une extrudeuse (10) en présence d'un fluide supercritique, **comprenant les étapes suivantes** :
- l'introduction de la gomme broyée dans une extrudeuse ;
- le transport de la gomme avec montée en pression et dans des conditions de température contrôlées ;
- l'ajout de CO₂ dans l'extrudeuse à un point d'ajout (16), auquel au moins 70 bar sont atteints ;
- le mélange et la plastification de la masse qui se forme dans les conditions dans l'extrudeuse (10) en aval du point d'ajout (16), la gomme étant dévulcanisée sous l'action de la pression, de la température et des forces de cisaillement, **caractérisé en ce que** l'extrudeuse est une extrudeuse à cylindres planétaires ou à anneaux, et les conditions de température contrôlées sont ajustées entre la température ambiante et 160 °C.

2. Procédé selon la revendication 1, **caractérisé en ce que** la température de l'extrudeuse en aval du point d'ajout de CO₂ (16) n'est pas ajustée à plus de 160 °C, de préférence pas à plus de 150 °C, de manière davantage préférée pas à plus de 120 °C et de manière particulièrement préférée entre 100 et 120 °C.

3. Procédé selon la revendication 1 ou 2, **caractérisé en ce que** la gomme broyée est introduite par gravimétrie et l'ajout de CO₂ est proportionnel à celle-ci.

4. Procédé selon l'une quelconque des revendications 1 à 3, **caractérisé en ce que,** par rapport au poids de la gomme utilisée, 1 à 10 % en poids de CO₂ et de préférence 1 à 5 % en poids de CO₂ sont utilisés.

5. Procédé selon l'une quelconque des revendications 1 à 4, **caractérisé en ce que** la taille de particule de la gomme broyée ne dépasse pas un diamètre moyen de 7 mm, de préférence de 5 mm.

6. Procédé selon l'une quelconque des revendications 1 à 5, **caractérisé en ce que** la matière régénérée de caoutchouc quittant l'extrudeuse (10) est granulée.

7. Procédé selon l'une quelconque des revendications 1 à 6, **caractérisé en ce que** la matière régénérée de caoutchouc soutirée de l'extrudeuse (10) est refroidie directement après le soutirage.

8. Procédé selon l'une quelconque des revendications 1 à 7, **caractérisé en ce que** la pression au point d'ajout (16) pour le CO₂ et en aval dans l'extrudeuse (10) est supérieure ou égale à 74 bar.

9. Procédé de fabrication d'un mélange de caoutchouc, comprenant les étapes suivantes :
le mélange d'une proportion de caoutchouc avec au moins un caoutchouc naturel ou de synthèse, au moins une charge, ainsi qu'éventuellement des additifs et adjuvants supplémentaires, **caractérisé en ce que** la proportion de caoutchouc du mélange contient la matière régénérée de caoutchouc obtenue selon l'une quelconque des revendications 1 à 8.

10. Procédé de fabrication d'un article en caoutchouc technique utilisant la matière régénérée de caoutchouc obtenue selon l'une quelconque des revendications 1 à 8.

11. Procédé de fabrication d'un article en caoutchouc technique selon la revendication 10, utilisant le mélange de caoutchouc selon la revendication 9.

12. Procédé de fabrication d'un article en caoutchouc technique selon la revendication 10 ou 11, **caractérisé en ce que** l'article en caoutchouc technique consiste en un pneu, notamment un pneu de véhicule, une sangle, une courroie ou un tuyau.
